# EUROPEAN PATENT SPECIFICATION

(11) **EP 3 892 887 B1**
(45) Date of publication and mention of the grant of the patent: **16.08.2023**
(21) Application number: 19892361.7
(22) Date of filing: 28.11.2019
(51) Int. Cl.: F16H 9/18, F16H 55/56

(54) **BELT-TYPE CONTINUOUSLY VARIABLE TRANSMISSION**
STUFENLOSES RIEMENGETRIEBE
TRANSMISSION À VARIATION CONTINUE DE TYPE COURROIE

(30) Priority: 05.12.2018 JP 2018228355
(43) Date of publication of application: 13.10.2021
(73) Proprietor: HONDA MOTOR CO., LTD., Minato-ku Tokyo 107-8556 (JP)
(72) Inventor: SUGANO Takeshi, Wako-shi, Saitama 351-0193 (JP); KAKEMIZU Kenichiro, Wako-shi, Saitama 351-0193 (JP); SUZUKI Hitoshi, Wako-shi, Saitama 351-0193 (JP)
(74) Representative: Kiwit, Benedikt
(86) International application number: PCT/JP2019/046612
(87) International publication number: WO 2020/116314

(56) References cited:
- EP-A1- 3 184 858
- EP-A2- 1 132 656
- WO-A1-2009/128107
- JP-A- H11 315 898
- JP-A- H11 315 898
- JP-A- 2007 205 525
- JP-A- 2007 205 525

## Description

### FIELD

The present invention relates to a belt-type continuously variable transmission device that includes a fixed umbrella body, a movable umbrella body, a roller weight, and a guide path. The fixed umbrella body is fixed to a driving shaft in an axially undisplaceable manner and includes an umbrella surface that is coaxial with the driving shaft. The movable umbrella body is mounted to the driving shaft in an axially displaceable manner and includes an umbrella surface. This umbrella surface is coaxial with the driving shaft and faces the umbrella surface of the fixed umbrella body to define a belt groove in conjunction with the umbrella surface of the fixed umbrella body. The roller weight is pressed on a back side of the umbrella surface of the movable umbrella body. The roller weight is configured to displace the movable umbrella body toward the fixed umbrella body, as the roller weight radially moves away from the driving shaft by a centrifugal force that is generated during rotation of the driving shaft. The guide path is formed on the back side of the umbrella surface of the movable umbrella body and includes guide surfaces and an end face. The guide surface is configured to guide radial movement of the roller weight while restricting circumferential displacement of the roller weight. The end face is configured to restrict radial movement of the roller weight. Such a belt type CVT device is known from JPH11315898A.

### BACKGROUND

Patent literature 1 discloses a belt-type continuously variable transmission including a fixed umbrella body and a movable umbrella body that constitute a primary sheave (driving pulley). The fixed umbrella body has an umbrella surface coaxial with a driving shaft. The movable umbrella body has an umbrella surface that is coaxial with the driving shaft and that faces the umbrella surface of the fixed umbrella body to define a belt groove. The movable umbrella body is formed with a guide path for guiding displacement of a roller weight, which is caused by an applied centrifugal force. The guide path is formed on a back side of the umbrella surface of the movable umbrella body and includes a guide surface and an end face. The guide surface guides radial movement of the roller weight while restricting circumferential displacement of the roller weight. The end face restricts radial movement of the roller weight.

### CITATION LIST

### PATENT LITERATURE

Patent literature 1: Japanese Patent No. 4873558

### BRIEF SUMMARY

### TECHNICAL PROBLEM

The guide surface is connected to an outer circumferential surface of a hub at a radially inner end. The guide surface crosses the outer circumferential surface of the hub at an acute angle. Thus, when the roller weight is displaced to push the movable umbrella body toward the fixed umbrella body, stress inevitably concentrates on a boundary between the guide surface and the outer circumferential surface of the hub in accordance with a reaction force from a driving belt, which is received by the umbrella surface. Reducing concentration of the stress can improve durability of the pulley.

The present invention has been achieved in view of these circumstances, and an object of the present invention is to provide a belt-type continuously variable transmission device configured to reduce stress that is generated at a boundary between a guide surface for a roller weight and an end face.

### SOLUTION TO PROBLEM

A first embodiment of the present invention provides a belt-type continuously variable transmission device that includes the features of claim 1.

Further embodiments are outlined in the dependent claims 2-4.

### ADVANTAGEOUS EFFECTS

In the first embodiment, the fixed umbrella body and the movable umbrella body constitute a pulley. When the rotation speed of the driving shaft is low, a small centrifugal force acts on the roller weight. Thus, the umbrella surface of the movable umbrella body moves away from the umbrella surface of the fixed umbrella body, resulting in widening of the belt groove. The wound radius of a driving belt is thus decreased. In the case in which this pulley is a driving pulley, a large reduction ratio is obtained. When the rotation speed of the driving shaft is increased, an increased centrifugal force acts on the roller weight. The roller weight displaces the movable umbrella body toward the fixed umbrella body. This narrows the belt groove. The wound radius of the driving belt is thus increased. At this time, stress concentrates on a boundary between the guide surface and the end face in accordance with a reaction force from the driving belt, which is received by the umbrella surface. Thus, the recessed surface reduces the stress, which is generated at the boundary between the guide surface and the end face, while an increase in weight is suppressed. This results in improvement in durability of the pulley.

Further, when the rotation speed of the driving shaft is increased, the roller weight radially moves away from the hub, whereby maximum stress acts on the boundary between the guide surface and the hub. The recessed surface effectively reduces the stress. This results in improvement in durability of the pulley.

Further, the guide surface, which is formed of the wall that is away from the hub in the two guide paths, is not connected to the end face. Thus, concentration of stress on the hub is avoided.

Further, the guide surface and the end face do not include a step other than the recessed surface, and therefore, the movable umbrella body is easy to process.

Further, stress is reduced compared with a case of connecting the recessed surface and the end face by a ridge. This results in improvement in durability of the pulley.

### BRIEF DESCRIPTION OF DRAWINGS

FIG. 1 is a side view schematically showing the whole saddled vehicle (motorcycle) according to an embodiment of the present invention (First Embodiment).
FIG. 2 is an enlarged horizontal sectional view of a power unit along a line 2-2 in FIG. 1 (First Embodiment).
FIG. 3 is an enlarged plane view of a movable umbrella body of a driving pulley (First Embodiment).
FIG. 4 is an enlarged partial perspective view of the movable umbrella body of the driving pulley (First Embodiment).
FIG. 5 is an enlarged plane view of a movable umbrella body of a driven pulley (First Embodiment).

### Reference Signs List

- 42: driving shaft (crankshaft)
- 54: belt-type continuously variable transmission device (belt-type continuously variable transmission)
- 61a: fixed umbrella body
- 61b: movable umbrella body
- 64a: umbrella surface (of fixed umbrella body)
- 64b: umbrella surface (of movable umbrella body)
- 67: roller weight
- 82: hub
- 86a: guide surface (first guide surface)
- 87: wall (second wall)
- 87a: second guide surface
- 88: guide path
- 89: end face (of hub)
- 92: recessed surface
- 93: curved surface
- 98: planar portion

### DETAILED DESCRIPTION

An embodiment of the present invention will be described with reference to the attached drawings hereinafter. In the following descriptions, a front-rear direction, an up-down direction, and a right-left direction represent directions as viewed from an occupant riding on a motorcycle.

### First Embodiment

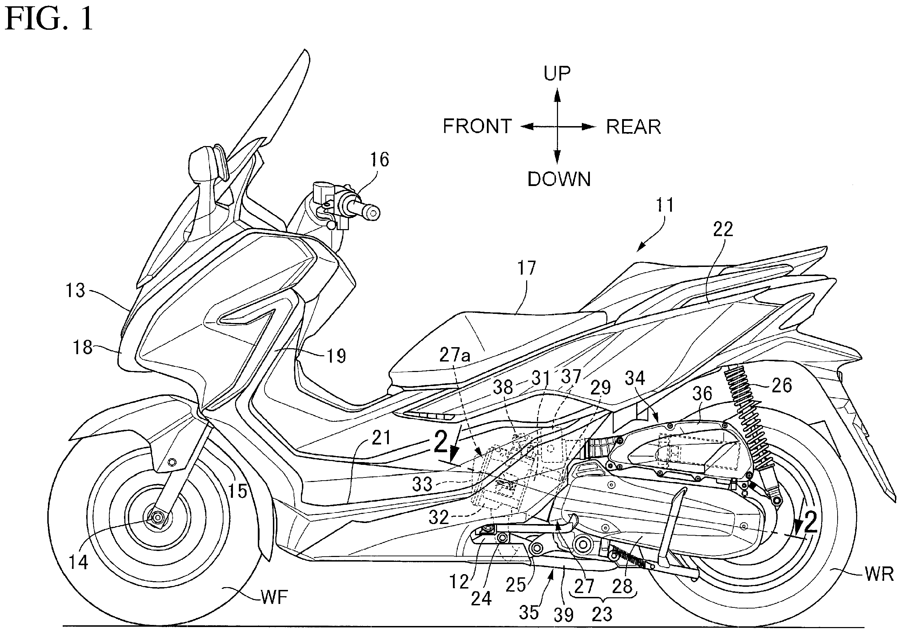

FIG. 1 schematically shows a scooter type motorcycle according to an embodiment of a saddled vehicle. A motorcycle 11 includes a vehicle body frame 12 and a vehicle body cover 13 fitted to the vehicle body frame 12. The vehicle body frame 12 has a head pipe that steerably supports a front fork 15 and a rod-shaped steering handlebar 16. The front fork 15 rotatably supports a front wheel WF around an axle 14.

The vehicle body cover 13 has an occupant seat 17 that is mounted over a rear frame. The vehicle body cover 13 includes a front cover 18, a leg shield 19, a step floor 21, and a rear cover 22. The front cover 18 covers the head pipe from a front side. The leg shield 19 continues rearward from the front cover 18. The step floor 21 continues from a lower end of the leg shield 19 to be disposed above a main frame between the occupant seat 17 and the front wheel WF. The rear cover 22 supports the occupant seat 17 above the rear frame.

A unit swing type power unit 23 is disposed in a space under the rear cover 22. The power unit 23 is coupled to a bracket 24 via a link 25 in a vertically swingable manner. The bracket 24 is joined to a front end of the rear frame. The power unit 23 rotatably supports a rear wheel WR around a horizontal axis, at a rear end. A rear cushion unit 26 is disposed between the rear frame and the power unit 23 at a position away from the link 25 and the bracket 24. The power unit 23 includes a single-cylinder water-cooled internal combustion engine 27 and a transmission case 28. The transmission case 28 is joined to an engine body 27a of the internal combustion engine 27 and houses a transmission that transmits output of the internal combustion engine 27 to the rear wheel WR.

The engine body 27a of the internal combustion engine 27 includes a crankcase 29, a cylinder block 31, a cylinder head 32, and a head cover 33. The crankcase 29 rotatably supports a crankshaft (described later) around a rotation axis. The cylinder block 31 is joined to the crankcase 29. The cylinder head 32 is joined to the cylinder block 31. The head cover 33 is joined to the cylinder head 32. The cylinder head 32 is connected to an intake unit 34 and an exhaust unit 35. The intake unit 34 includes an air cleaner 36 and a throttle body 37. The air cleaner 36 is supported by the transmission case 28, and the air cleaner 36 sucks and purifies outside air. The throttle body 37 is an intake system component for connecting the air cleaner 36 to the cylinder head 32.

The amount of flow of the purified air that is supplied from the air cleaner 36, is adjusted by the action of a throttle in the throttle body 37. The cylinder head 32 has an upper side-wall on which a fuel injection unit 38 is mounted. The fuel injection unit 38 injects fuel to the purified air to produce air-fuel mixture.

The exhaust unit 35 includes an exhaust pipe 39 and an exhaust muffler (not shown). The exhaust pipe 39 extends rearward from a lower side-wall of the cylinder head 32 via a lower side of the internal combustion engine 27. The exhaust muffler is connected to a downstream end of the exhaust pipe 39 and is coupled to the crankcase 29.

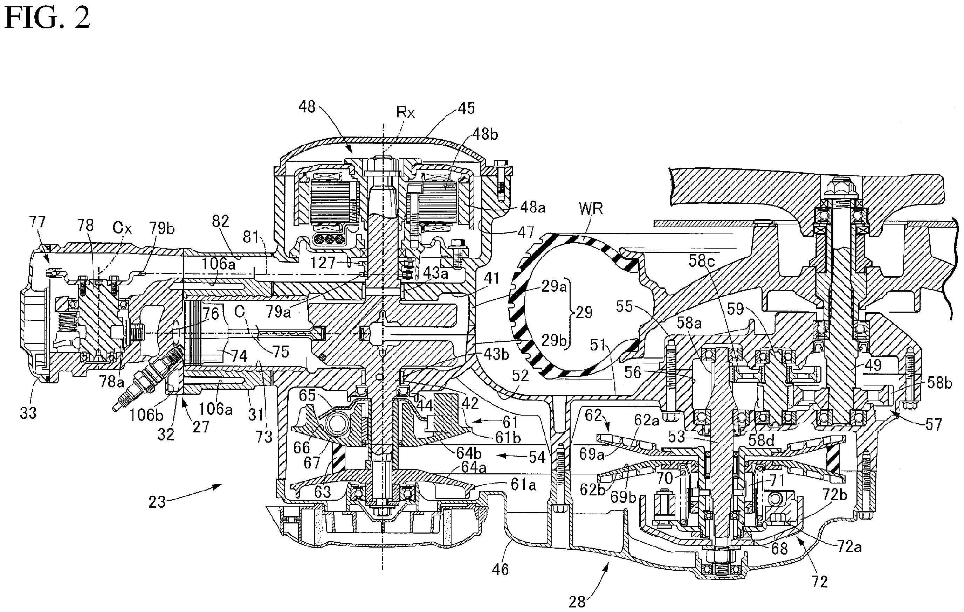

As shown in FIG. 2, the crankcase 29 includes a first case half body 29a and a second case half body 29b. The first case half body 29a and the second case half body 29b cooperatively define a crank chamber 41. The crank chamber 41 houses a crank of a crankshaft 42. A first slide bearing 43a is assembled to the first case half body 29a. The first slide bearing 43a rotatably supports a first journal of the crankshaft 42. A second slide bearing 43b is assembled to the second case half body 29b. The second slide bearing 43b rotatably supports a second journal of the crankshaft 42.

A packing 44 is assembled to the second case half body 29b in a coaxial manner with the crankshaft 42, on an outside of the second slide bearing 43b. The packing 44 is in contact with an outer circumference of the crankshaft 42 to seal between the second case half body 29b and the crankshaft 42. The packing 44 provides liquid-tightness to the crank chamber 41.

The crankcase 29 also includes a generator cover 45 and a transmission cover 46. The generator cover 45 is a first crank cover that is joined to the first case half body 29a to cover an end of the crankshaft 42, which outwardly protrudes from the first slide bearing 43a. The transmission cover 46 is a second crank cover that is joined to the second case half body 29b to cover the other end of the crankshaft 42, which outwardly protrudes from the second slide bearing 43b. The generator cover 45 forms a generator chamber 47 between the first case half body 29a and the generator cover 45.

The generator chamber 47 houses an alternating current generator (ACG) 48 that is coupled to the end of the crankshaft 42. The alternating current generator 48 includes a cylindrical rotor 48a and a stator 48b. The rotor 48a is fixed to the end of the crankshaft 42, which protrudes from the outer surface of the first case half body 29a. The stator 48b is disposed around the crankshaft 42 while being surrounded by the rotor 48a. The stator 48b includes annularly arranged multiple stator cores that are fixed to the first case half body 29a. Each of the stator cores is wound with a coil. The rotor 48a includes a magnet configured to follow an annular orbit on a radially outside of the stator core. Rotation of the rotor 48a relative to the stator 48b causes the alternating current generator 48 to generate electric power. The alternating current generator 48 may be used as an ACG starter.

The second case half body 29b is integrally formed with a swing body 51, which rotatably supports an axle 49 of the rear wheel WR. The transmission cover 46 forms a transmission chamber 52 between the second case half body 29b and the swing body 51, and the transmission cover 46. The transmission chamber 52 houses a belt-type continuously variable transmission (hereinafter called a "transmission") 54, which transmits rotation power from the crankshaft 42 to a driven shaft 53 while continuously varying rotation speed. The transmission 54 will be detailed later. The swing body 51 and the transmission cover 46 form the transmission case 28.

A gear cover 55 is fastened to the second case half body 29b to cover an end of the driven shaft 53, which protrudes from the second case half body 29b to the axle 49 side of the rear wheel WR. The gear cover 55 forms a gear chamber 56 between the second case half body 29b and the gear cover 55. The gear chamber 56 houses a reduction gear mechanism 57 that transmits rotation power from the driven shaft 53 to the axle 49 of the rear wheel WR at a specified reduction ratio.

The reduction gear mechanism 57 includes a driving gear 58a, a final gear 58b, and idle gears 58c and 58d. The driving gear 58a is fixed to the driven shaft 53, which protrudes into the gear chamber 56. The final gear 58b is fixed to the axle 49 of the rear wheel WR. The idle gears 58c and 58d are arranged between the driving gear 58a and the final gear 58b. The idle gears 58c and 58d are fixed to a common intermediate shaft 59. The driving gear 58a meshes with the idle gear 58c, whereas the final gear 58b meshes with the idle gear 58d. Thus, the rotation of the driven shaft 53 is transmitted to the axle 49 of the rear wheel WR while being decelerated.

The transmission 54 includes a driving pulley 61, a driven pulley 62, and a V belt (driving belt) 63. The driving pulley 61 is mounted to the crankshaft 42, which protrudes from the outer surface of the second case half body 29b. The driven pulley 62 is mounted to the driven shaft 53. The V belt 63 is wound around between the driving pulley 61 and the driven pulley 62.

The driving pulley 61 includes a fixed umbrella body 61a and a movable umbrella body 61b. The fixed umbrella body 61a is fixed to the crankshaft 42 in an axially undisplaceable manner and has an umbrella surface 64a. The umbrella surface 64a is coaxial with the crankshaft 42 and faces the second case half body 29b. The movable umbrella body 61b is axially displaceably mounted to the crankshaft 42 between the fixed umbrella body 61a and the second case half body 29b and has an umbrella surface 64b. The umbrella surface 64b is coaxial with the crankshaft 42 and faces the umbrella surface 64a of the fixed umbrella body 61a. The umbrella surface 64a of the fixed umbrella body 61a and the umbrella surface 64b of the movable umbrella body 61b define a belt groove. The V belt 63 is wound in the belt groove.

A weight holding plate 65 is fixed to the crankshaft 42 in an axially undisplaceable manner so as to face an outward surface (back side of the umbrella surface 64a) of the movable umbrella body 61b. A roller weight 67 is held between a cam surface 66 of the movable umbrella body 61b and the weight holding plate 65. The cam surface 66 is separated from the fixed umbrella body 61a as being separated from a rotation axis Rx of the crankshaft 42 in the centrifugal direction. Rotation of the crankshaft 42 generates a centrifugal force in the roller weight 67. The centrifugal force displaces the roller weight 67 in the centrifugal direction. As the roller weight 67 is displaced in the centrifugal direction while rolling-contacts with the cam surface 66, the movable umbrella body 61b is driven toward the fixed umbrella body 61a. Thus, in accordance with rotation of the crankshaft 42, the movable umbrella body 61b axially moves toward the fixed umbrella body 61a, resulting in increase in the wound radius of the V belt 63.

The driven pulley 62 includes an inner cylinder 68, a fixed umbrella body 62a, an outer cylinder 71, and a movable umbrella body 62b. The inner cylinder 68 has a cylindrical shape coaxial with the driven shaft 53 and is coaxially mounted to the driven shaft 53. The fixed umbrella body 62a is fixed to the inner cylinder 68 and has an umbrella surface 69a. The umbrella surface 69a is coaxial with the driven shaft 53 and faces the transmission cover 46. The outer cylinder 71 has a cylindrical shape coaxial with the driven shaft 53 and is coaxially fitted to the inner cylinder 68. The movable umbrella body 62b is fixed to the outer cylinder 71 between the fixed umbrella body 62a and the transmission cover 46 and has an umbrella surface 69b. The umbrella surface 69b is coaxial with the driven shaft 53 and faces the umbrella surface 69a of the fixed umbrella body 62a. The umbrella surface 69a of the fixed umbrella body 62a and the umbrella surface 69b of the movable umbrella body 62b define a belt groove therebetween. The V belt 63 is wound in the belt groove. The inner cylinder 68 is relatively rotatably supported by the driven shaft 53. The outer cylinder 71 is relatively rotatably supported by the inner cylinder 68 in a manner relatively displaceable in the axial direction. In accordance with the relative axial displacement of the outer cylinder 71 relative to the inner cylinder 68, the movable umbrella body 62b moves close to and away from the fixed umbrella body 62a.

A centrifugal clutch 72 is mounted to the driven shaft 53. The centrifugal clutch 72 includes a clutch plate 72a that is fixed to the inner cylinder 68. A coil spring 70 is disposed between the clutch plate 72a and the movable umbrella body 62b. The coil spring 70 exerts an elastic force for pushing the movable umbrella body 62b toward the fixed umbrella body 62a. As the wound radius of the V belt 63 increases at the driving pulley 61, the movable umbrella body 62b moves away from the fixed umbrella body 62a against the elastic force of the coil spring 70, resulting in decrease in the wound radius of the V belt 63, at the driven pulley 62.

The centrifugal clutch 72 includes an outer plate 72b that is fixed to the driven shaft 53. The outer plate 72b is made to face the clutch plate 72a. During rotation of the clutch plate 72a, the outer plate 72b is joined to the clutch plate 72a by the action of a centrifugal force. Thus, the rotation of the driven pulley 62 is transmitted to the driven shaft 53. The centrifugal clutch 72 establishes a power transmitting state when a number of engine revolutions exceeds a set number of revolutions.

The cylinder block 31 defines a cylinder bore 73. A piston 74 is slidably inserted into the cylinder bore 73 along a cylinder axis C. The piston 74 is coupled to the crank of the crankshaft 42 by a connecting rod 75. The cylinder axis C is inclined so as to be slightly raised at a front side from a horizontal direction. The cylinder block 31 guides linear reciprocation of the piston 74 along the cylinder axis C. The linear reciprocation of the piston 74 is converted into rotation movement of the crankshaft 42. A combustion chamber 76 is defined between the piston 74 and the cylinder head 32.

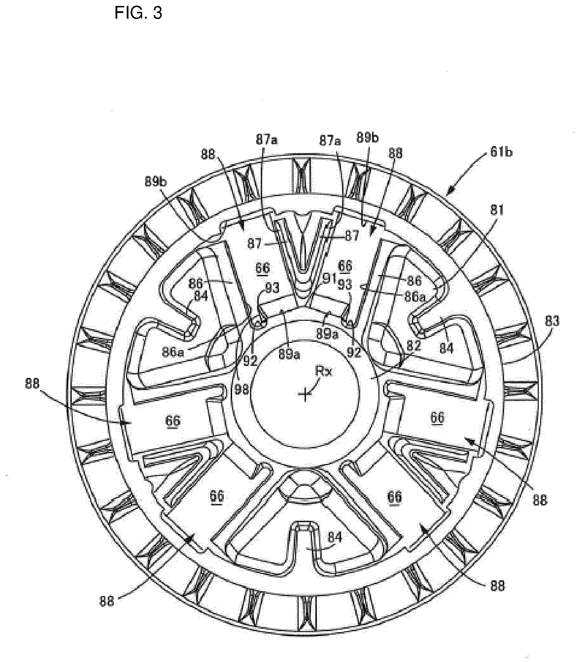

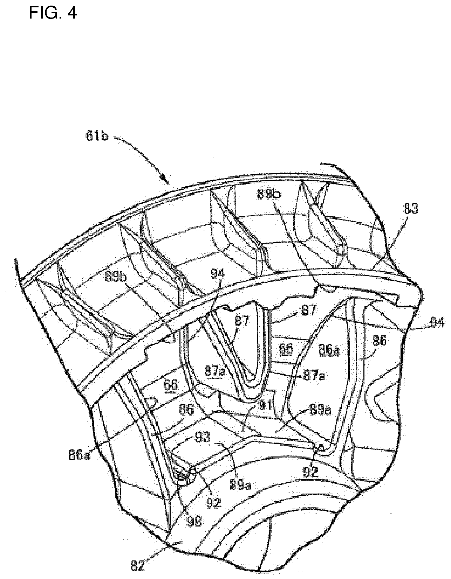

As shown in FIGs. 3 and 4, the movable umbrella body 61b of the driving pulley 61 includes a dish-shaped body 81 that has the umbrella surface 64b and that is coaxial with the crankshaft 42. A cylindrical hub 82 is formed on a back side of the umbrella surface 64b of the body 81. The hub 82 extends in the axial direction of the crankshaft 42 and coaxially receives the crankshaft 42. The hub 82 is integrally formed to the body 81 on the back side of the umbrella surface 64b and is surrounded by a cylindrical outer wall 83, which is coaxial with the hub 82. Three reinforcing ribs 84 are integrally formed to the inside of the outer wall 83. The ribs 84 are disposed at equal intervals in the circumferential direction and extend continuously from the body 81 in the axial direction.

A pair of the cam surfaces 66 are disposed at each space between the reinforcing ribs 84. The body 81 is formed with a pair of first walls 86 and a pair of second walls 87. The first wall 86 rises from the body 81 at each side of the pair of the cam surfaces 66 and is connected to the hub 82 at a radially inner end. The second wall 87 rises from the body 81 at a position between the pair of the cam surfaces 66 and faces the first wall 86 at a position radially separated from the hub 82. The pair of the second walls 87 are joined to each other at radially inner ends.

The first wall 86 provides a flat first guide surface 86a that retains the roller weight 67 on the cam surface 66 while restricting circumferential displacement of the roller weight 67. The second wall 87 provides a flat second guide surface 87a that extends in parallel to the first guide surface 86a so as to retain the roller weight 67 on the cam surface 66 while restricting circumferential displacement of the roller weight 67. A guide path 88 for guiding movement of the roller weight 67 along the cam surface 66, is defined between the first guide surface 86a and the second guide surface 87a.

A flat end face 89a for restricting radial movement of the roller weight 67 is formed to the hub 82, continuously from the cam surface 66. The end faces 89a between the pair of the cam surfaces 66 are continued to each other by one ridge 91 that is parallel to the rotation axis Rx of the crankshaft 42. The first guide surface 86a is connected to the end face 89a by a recessed surface 92 that is recessed at the end face 89a. The recessed surface 92 is connected to the end face 89a by a curved surface 93. The recessed surface 92 is formed of a curved surface in contact with the first guide surface 86a. A planar portion 98 radially extends between the recessed surface 92 and the end face 89a (more specifically the curved surface 93). An end face 89b for restricting radial movement of the roller weight 67 is formed to the outer wall 83, continuously from the cam surface 66.

The first guide surface 86a and the second guide surface 87a are connected to the cam surface 66 by recessed surfaces 94 that are recessed at the cam surface 66. The recessed surface 94 can be formed of, for example, a curved surface in contact with the first guide surface 86a or the second guide surface 87a. The curvature of this curved surface is set greater than that of the recessed surface 92. The recessed surface 94 serves to avoid interference between the roller weight 67, and the first guide surface 86a or the second guide surface 87a.

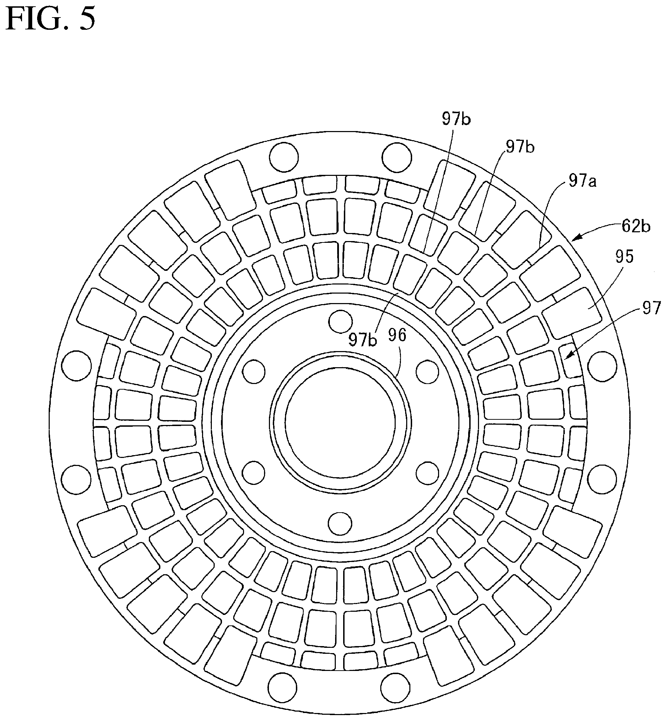

As shown in FIG. 5, the movable umbrella body 62b of the driven pulley 62 includes a dish-shaped body 95, which has the umbrella surface 69b and is coaxial with the driven shaft 53. A cylindrical hub 96 is formed on a back side of the umbrella surface 69b of the body 95. The hub 96 extends in the axial direction of the driven shaft 53 and coaxially receives the inner cylinder 68. The hub 96 includes a rib 97 that is integrally formed on the back side of the umbrella surface 69b of the body 95. The rib 97 is formed of a linear rib 97a and an annular rib 97b. The linear rib 97a extends in the centrifugal direction on a diameter line. The annular rib 97b is coaxial with the driven shaft 53 while crossing the linear rib 97a. Similarly, the fixed umbrella body 62a includes a dish-shaped body and ribs that are formed on a back side of the umbrella surface 69a of the body.

Next, movement of the belt-type continuously variable transmission 54 according to this embodiment will be overviewed. When the rotation speed of the crankshaft (driving shaft) 42 is low, a small centrifugal force acts on the roller weight 67. Thus, the umbrella surface 64b of the movable umbrella body 61b moves away from the umbrella surface 64a of the fixed umbrella body 61a, resulting in widening of the belt groove. The wound radius of the V belt 63 is thus decreased at the driving pulley 61. As to the driven pulley 62, the movable umbrella body 62b moves away from the fixed umbrella body 62a in accordance with the elastic force of the coil spring 70. A large reduction ratio is thus obtained.

When the rotation speed of the crankshaft 42 is increased, an increased centrifugal force acts on the roller weight 67. The roller weight 67 displaces the movable umbrella body 61b toward the fixed umbrella body 61a. This narrows the belt groove. The wound radius of the V belt 63 is thus increased at the driving pulley 61. As to the driven pulley 62, the movable umbrella body 62b approaches the fixed umbrella body 62a against the elastic force of the coil spring 70. The reduction ratio is thus decreased.

When the roller weight 67 axially applies a thrust on the movable umbrella body 61b at the driving pulley 61, stress concentrates on a boundary between the first guide surface 86a and the end face 89a, in accordance with a reaction force from the V belt 63, which is received by the umbrella surface 64b. The recessed surface 92 reduces the stress generated at the boundary between the first guide surface 86a and the end face 89a. This results in improvement in durability of the driving pulley 61.

In this embodiment, the recessed surface 92 is formed to the hub 82 of the movable umbrella body 61b. That is, the recessed surface 92 is formed at the boundary between the first guide surface 86a and the end face 89a. When the rotation speed of the crankshaft 42 is increased, the roller weight 67 radially moves away from the hub 82, whereby maximum stress acts on the boundary between the first guide surface 86a and the hub 82. The recessed surface 92 effectively reduces the stress. This results in improvement in durability of the driving pulley 61.

In the movable umbrella body 61b according to this embodiment, the second walls 87 for forming the second guide surfaces 87a are formed away from the hub 82 between adjacent two of the guide paths 88. The second guide surfaces 87a, which are formed of the second walls 87 that are away from the hub 82 in the two guide paths 88, are not connected to the end faces 89a. Thus, concentration of stress on the hub 82 is avoided.

The recessed surface 92 is formed of the curved surface in contact with the first guide surface 86a, which is formed of the flat surface. The first guide surface 86a and the end face 89a do not include a step other than the recessed surface 92, and therefore, the movable umbrella body 61b is easy to process.

The recessed surface 92 and the end face 89a are connected to each other by the curved surface 93. This structure decreases stress compared with a case of connecting the recessed surface 92 and the end face 89a by a ridge. This results in improvement in durability of the driving pulley 61.

## Claims

1. A belt-type continuously variable transmission device (54) comprising:
a fixed umbrella body (61a) being fixed to a driving shaft (42) in an axially undisplaceable manner and including an umbrella surface (64a) that is coaxial with the driving shaft (42);
a movable umbrella body (61b) being mounted to the driving shaft (42) in an axially displaceable manner and including an umbrella surface (64b), the umbrella surface (64b) being coaxial with the driving shaft (42) and facing the umbrella surface (64a) of the fixed umbrella body (61a) to define a belt groove in conjunction with the umbrella surface (64b);
a roller weight (67) being pressed on a back side of the umbrella surface (64b) of the movable umbrella body (61b), the roller weight (67) being configured to displace the movable umbrella body (61b) toward the fixed umbrella body (61a), as the roller weight (67) radially moves away from the driving shaft (42) by a centrifugal force that is generated during rotation of the driving shaft (42); and
a guide path (88) being formed on the back side of the umbrella surface (64b) of the movable umbrella body (61b) and including guide surfaces (86a, 87a) and an end face (89a), the guide surface (86a, 87a) being configured to guide radial movement of the roller weight (67) while restricting circumferential displacement of the roller weight (67),
the guide surface (86a) being connected to the end face (89a) by a recessed surface (92) that is recessed at the end face (89a);
the recessed surface (92) is formed to a hub (82) of the movable umbrella body (61b);
the end face (89a) being configured to restrict radial movement of the roller weight (67) is formed to the hub (82), continuously from a cam surface (66) of the movable umbrella body (61b);
**characterized in that**
the end faces (89a) between a pair of the cam surfaces (66) are continued to each other by a ridge (91) that is parallel to a rotation axis (Rx) of the driving shaft (42).

2. The belt-type continuously variable transmission device according to claim 1, wherein a wall (87) for forming the guide surface (87a) is formed away from the hub (82) between adjacent two of the guide paths (88).

3. The belt-type continuously variable transmission device according to claim 1 or 2, wherein the recessed surface (92) is formed of a curved surface in contact with the guide surface (86a) that is made of a flat surface.

4. The belt-type continuously variable transmission device according to any one of claims 1 to 3, wherein the recessed surface (92) and the end face (89a) are connected by a curved surface (93).

## Patentansprüche

1. Stufenlose Riemengetriebevorrichtung (54), die aufweist.
einen feststehenden Schirmkörper (61a), der an der Antriebswelle (42) in einer axialen nicht versetzbaren Weise befestigt ist und eine Schirmfläche (64a) aufweist, die koaxial zur Antriebswelle (42) ist;
einen bewegbaren Schirmkörper (61b), der an der Antriebswelle (42) in einer axial versetzbaren Weise angebracht ist und eine Schirmfläche (64b) aufweist, wobei die Schirmfläche (64b) koaxial zur Antriebswelle (42) ist und der Schirmfläche (64a) des feststehenden Schirmkörpers (61a) zugewandt ist, um eine Riemennut in Verbindung mit der Schirmfläche (64b) zu definieren;
ein Rollengewicht (67), das an eine Rückseite der Schirmfläche (64b) des bewegbaren Schirmkörpers (61b) gepresst wird, wobei das Rollengewicht (67) ausgestaltet ist, den bewegbaren Schirmkörper (61b) in Richtung des feststehenden Schirmkörpers (61a) zu bewegen, wenn sich das Rollengewicht (67) von der Antriebswelle (42) durch eine Zentrifugalkraft, die während der Rotation der Antriebswelle (42) erzeugt wird; radial wegbewegt; und
einen Führungspfad (88), der an der Rückseite der Schirmfläche (64b) des bewegbaren Schirmkörpers (61b) ausgebildet ist und Führungsflächen (86a, 87a) und eine Endfläche (84a) aufweist, wobei die Führungsfläche (86a, 87a) ausgestaltet ist, eine radiale Bewegung des Rollengewichts (67) zu führen, während die Umfangsversetzung des Rollengewichts (67) beschränkt wird,
die Führungsfläche (86a) mit der Endfläche (89a) durch eine ausgesparte Fläche (92) verbunden ist, die an der Endfläche (89a) ausgespart ist;
die ausgesparte Fläche (92) an einer Nabe (82) des bewegbaren Schirmkörpers (61b) ausgebildet ist;
die Endfläche (82a), die ausgestaltet ist, die radiale Bewegung des Rollengewichts (67) zu beschränken, an der Nabe (82) fortlaufend von einer Nockenfläche (66) des bewegbaren Schirmkörpers (61b) ausgebildet ist;
**dadurch gekennzeichnet, dass**
die Endflächen (89a) zwischen einem Paar von Nockenflächen (66) zueinander über einen Grat (91) fortgesetzt sind, der parallel zur Rotationsachse (Rx) der Antriebswelle (42) ist.

2. Stufenlose Riemengetriebevorrichtung nach Anspruch 1, wobei eine Wand (87) zum Ausbilden der Führungsfläche (87a) entfernt von der Nabe (82) zwischen zwei benachbarten der Führungspfade (88) ausgebildet ist.

3. Stufenlose Riemengetriebevorrichtung nach Anspruch 1 oder 2, wobei die ausgesparte Fläche (92) als eine gebogene Fläche in Kontakt mit einer Führungsfläche (86a) ausgebildet ist, die aus einer flachen Fläche hergestellt ist.

4. Stufenlose Riemengetriebevorrichtung nach einem der Ansprüche 1 bis 3, wobei die ausgesparte Fläche (92) und die Endfläche (89a) durch eine gebogene Fläche (93) verbunden sind.

## Revendications

1. Dispositif de transmission à variation continue de type courroie (54) comprenant :
un corps de parapluie fixe (61a) fixé à un arbre d'entraînement (42) d'une manière non déplaçable axialement et comportant une surface de parapluie (64a) qui est coaxiale avec l'arbre d'entraînement (42) ;
un corps de parapluie mobile (61b) monté sur l'arbre d'entraînement (42) d'une manière déplaçable axialement et comportant une surface de parapluie (64b), la surface de parapluie (64b) étant coaxiale avec l'arbre d'entraînement (42) et faisant face à la surface de parapluie (64a) du corps de parapluie fixe (61a) pour définir une rainure de courroie conjointement avec la surface de parapluie (64b) ;
un poids de rouleau (67) appuyé sur un côté arrière de la surface de parapluie (64b) du corps de parapluie mobile (61b), le poids de rouleau (67) étant configuré pour déplacer le corps de parapluie mobile (61b) vers le corps de parapluie fixe (61a), alors que le poids de rouleau (67) s'éloigne radialement de l'arbre d'entraînement (42) par une force centrifuge qui est générée durant une rotation de l'arbre d'entraînement (42) ; et
un trajet de guidage (88) formé sur le côté arrière de la surface de parapluie (64b) du corps de parapluie mobile (61b) et comportant des surfaces de guidage (86a, 87a) et une face d'extrémité (89a), la surface de guidage (86a, 87a) étant configurée pour guider un mouvement radial du poids de rouleau (67) tout en limitant un déplacement circonférentiel du poids de rouleau (67),
la surface de guidage (86a) étant reliée à la face d'extrémité (89a) par une surface évidée (92) qui est évidée au niveau de la face d'extrémité (89a) ;
la surface évidée (92) est formée sur un moyeu (82) du corps de parapluie mobile (61b) ;
la face d'extrémité (89a) configurée pour limiter un mouvement radial du poids de rouleau (67) est formée sur le moyeu (82), de façon continue à partir d'une surface de came (66) du corps de parapluie mobile (61b) ;
**caractérisé en ce que**
les faces d'extrémité (89a) entre une paire des surfaces de came (66) sont continues l'une avec l'autre par une arête (91) qui est parallèle à un axe de rotation (Rx) de l'arbre d'entraînement (42).

2. Dispositif de transmission à variation continue de type courroie selon la revendication 1, dans lequel une paroi (87) pour former la surface de guidage (87a) est formée à distance du moyeu (82) entre deux adjacents parmi les trajets de guidage (88).

3. Dispositif de transmission à variation continue de type courroie selon la revendication 1 ou 2, dans lequel la surface évidée (92) est constituée d'une surface incurvée en contact avec la surface de guidage (86a) qui est faite d'une surface plate.

4. Dispositif de transmission à variation continue de type courroie selon l'une quelconque des revendications 1 à 3, dans lequel la surface évidée (92) et la face d'extrémité (89a) sont reliées par une surface incurvée (93).
